# DEMANDE DE BREVET EUROPEEN

(11) **EP 1 095 762 A1**
(43) Date de publication de la demande: **02.05.2001**
(21) Numéro de dépôt: 00402882.5
(22) Date de dépôt: 18.10.2000
(51) Int. Cl.: B29D 9/00, B29D 24/00, B62D 29/04, B62D 33/06, B32B 3/12, B29C 70/44

(54) **Procédé de fabrication d'un panneau à structure composite, en particuler pour former un pavillon ou un plancher de cabine de véhicule industriel, et panneau ainsi fabriqué**

(30) Priorité: 27.10.1999 FR 9913425
(71) Demandeur: HUTCHINSON, 75008 Paris (FR)
(72) Inventeur: Crand, Evelyne, 86100 Chatellerault (FR); Quenet, Bernard, 86490 Beaumont (FR)
(74) Mandataire: Doireau, Marc

(57) **Abrégé**

Procédé de fabrication d'un panneau à structure composite, en particulier d'un pavillon ou d'un plancher de cabine (1) d'un véhicule industriel, ledit panneau comprenant une peau externe (10), une peau interne (12) et un matelas intermédiaire (14) d'isolation thermique et/ou phonique, caractérisé en ce qu'il consiste à réaliser lesdites peaux interne et externe (10,12) en une seule opération de moulage par injection à basse pression d'une matière thermodurcissable tel qu'un polymère de dicyclopentadiène.

## Description

L'invention concerne un procédé de fabrication d'un panneau à structure composite ou panneau composite de type "sandwich", en particulier pour former un pavillon ou un plancher de cabine de véhicule automobile industriel.

D'une manière générale, la plupart des véhicules industriels actuels sont équipés d'un pavillon de cabine, souvent en plusieurs parties, qui est constitué d'une peau externe en acier ou en matière plastique montée sur une armature métallique. Cet ensemble est ensuite fixé sur la partie de la carrosserie du véhicule qui délimite le pavillon de la cabine.

Un but de l'invention est de concevoir un panneau à structure composite qui puisse , dans le cas de la réalisation d'un pavillon de cabine par exemple, être fabriqué de manière à constituer un ensemble monobloc et être monté sans nécessiter une quelconque ossature métallique de support.

A cet effet, l'invention propose un procédé de fabrication d'un panneau à structure composite, en particulier d'un pavillon ou d'un plancher de cabine d'un véhicule industriel, ledit panneau comprenant une peau externe, une peau interne et un matelas intermédiaire d'isolation thermique et/ou phonique, caractérisé en ce qu'il consiste à réaliser lesdites peaux interne et externe en une seule opération de moulage par injection à basse pression d'une matière choisie parmi les matières thermoplastiques ou thermodurcissables.

Avantageusement, le procédé consiste à utiliser une matière thermodurcissable tel qu'un polymère de dicyclopentadiène pour réaliser lesdites peaux.

D'une manière générale, le matelas d'isolation phonique et/ou thermique peut être réalisé sous une forme cellulaire à partir d'un matériau élastomère ou d'une matière thermoplastique, sous la forme d'une structure en nid d'abeilles réalisée en carton, en matière plastique, en acier ou en aluminium, ou sous la forme d'une structure pleine en balsa par exemple.

Avantageusement, le procédé consiste à utiliser une matière cellulaire, en particulier de la mousse de polyuréthanne, comme matelas intermédiaire d'isolation thermique et/ou phonique.

Selon un exemple de fabrication avec un matelas intermédiaire en matière cellulaire, le procédé consiste à fabriquer les peaux interne et externe au moyen d'un moule dans lequel on injecte ensuite la matière cellulaire, et à rapporter directement par collage le panneau ainsi formé sur un cadre de support.

En variante de cet exemple de fabrication, on peut fabriquer séparément les peaux interne et externe, et les assembler par collage ou les positionner dans un moule pour pouvoir injecter ensuite le matelas intermédiaire en matière cellulaire.

Selon un autre exemple de fabrication, on réalise le matelas intermédiaire d'isolation thermique et/ou phonique, on surmoule les peaux externe et interne sur ledit matelas intermédiaire, puis on rapporte directement par collage le panneau ainsi formé sur un cadre de support.

Le procédé selon l'invention présente notamment pour avantage de pouvoir fabriquer en une seule opération d'injection des pièces de grandes dimensions ayant une rigidité suffisante pour pouvoir être montés sans aucune ossature de support.

L'invention concerne également un panneau à structure composite, en particulier pour former un pavillon ou un plancher de cabine de véhicule industriel, ce pavillon ou ce plancher étant réalisé sous la forme d'un panneau monobloc fabriqué selon le procédé tel que défini précédemment.

Dans le cas d'un pavillon de cabine, le panneau peut être avantageusement équipé d'accessoires, tels une fenêtre et/ou un coffre de rangement et/ou un éclairage et/ou un toit ouvrant.

La structure monobloc du pavillon de cabine permet de le fixer directement par collage sur le cadre de carrosserie de la cabine.

Selon un exemple de réalisation préférentiel de pavillon ou de plancher de cabine, les peaux externe et interne sont réalisées en une matière thermodurcissable tel qu'un polymère de dicyclopentadiène, et le matelas d'isolation phonique et/ou thermique est réalisé en une mousse de polyuréthanne.

En outre, le pavillon ou le plancher de cabine selon l'invention est d'une conception simple, qui est facile à mettre en oeuvre, à manipuler et à monter sans avoir recours à un quelconque outillage, et sa conception monobloc permet de supprimer toute ossature métallique d'assemblage qui était nécessaire dans le cas d'un pavillon en plusieurs parties.

Par ailleurs, lorsque le panneau est réalisé à partir d'un polymère de dicyclopentadiène, il n'est pas nécessaire de la charger pour augmenter sa rigidité même si le panneau est de grandes dimensions.

Le panneau à structure composite selon l'invention peut également être utilisé pour former une cloison de cabine, en particulier le panneau arrière du pavillon de toit.

D'autres avantages, caractéristiques et détails de l'invention ressortiront du complément de description qui va suivre en référence aux dessins annexés, donnés uniquement à titre d'exemple et dans lesquels :
- la figure 1 est une vue en perspective schématique d'un pavillon de cabine réalisé à partir d'un panneau à structure composite selon l'invention,
- la figure 2 est une vue en coupe suivant la ligne II-II de la figure 1 pour illustrer un mode de réalisation d'un pavillon de cabine selon l'invention,
- la figure 3 est une vue en perspective d'un autre mode de réalisation d'un pavillon de cabine selon l'invention, et
- les figures 4 à 6 sont respectivement des vues en coupe selon les lignes IV-IV, V-V et VI-VI de la figure 3.

Un panneau à structure composite selon l'invention va être décrit ci-après dans une application qui concerne la réalisation d'un pavillon de cabine pour un véhicule industriel.

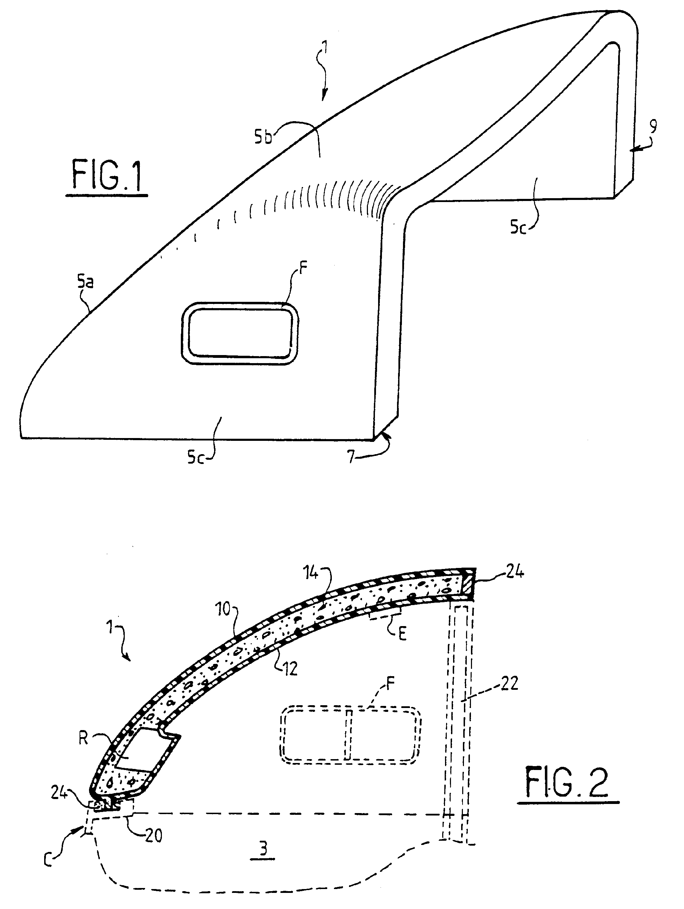

Le pavillon 1 tel qu'illustré aux figures 1 et 2 est destiné à équiper la partie supérieure d'une cabine 3 d'un véhicule industriel tel qu'un véhicule poids lourd par exemple.

Le pavillon 1 se présente globalement sous la forme d'un caisson creux ouvert. Ce caisson est délimité par une paroi avant bombée 5a , par une paroi supérieure 5b qui prolonge vers l'arrière la paroi avant 5a, et par deux parois latérales 5c qui bordent les parois avant 5a et supérieure 5b.

La face d'extrémité de la paroi avant 5a et les faces d'extrémité inférieure des parois latérales 5c forment une surface d'appui inférieure 7, alors que la face d'extrémité arrière de la paroi supérieure 5b et les faces d'extrémité arrière des parois latérales 5c forment une surface d'appui arrière 9.

D'une manière générale, le pavillon 1 est fabriqué en présentant une structure composite du type "sandwich".

Plus précisément, en se reportant à la figure 2, le pavillon 1 comprend une peau externe 10, une peau interne 12 et une matière de remplissage intercalée entre les deux peaux 10 et 12 pour former un matelas 14 d'isolation phonique et/ou thermique.

Les peaux externe 10 et interne 12 sont de préférence fabriquées dans une matière thermodurcissable. A titre d'exemple, on peut utiliser du polypropylène, du PVC, un polyester insaturé, un polycarbonate ou un polyuréthanne, et plus particulièrement un polymère de dicyclopentadiène.

Le matelas 14 d'isolation phonique et thermique peut présenter, quant à lui :
- une structure alvéolaire fabriquée à partir d'une mousse de polyuréthanne, de polypropylène, de polyéthylène, de PVC, de polystyrène ou une mousse phénolique,
- une structure en nid d'abeilles fabriquée en carton, en matière plastique, en acier ou en aluminium, ou
- une structure pleine fabriquée en balsa, par exemple.

D'une manière générale, le pavillon de cabine 1 est destiné à former un ensemble monobloc, et sa fabrication peut être envisagée selon plusieurs procédés en fonction des matériaux utilisés et de la structure choisie pour réaliser le matelas 14 d'isolation phonique et/ou thermique.

D'une façon préférentielle, le procédé de fabrication du pavillon de cabine 1 utilise un procédé de moulage par injection à basse pression, pour réaliser les peaux externe 10 et interne 12. Comme indiqué en préambule, un tel procédé permet de fabriquer en une seule opération des peaux de grandes dimensions. A titre d'exemple, un pavillon de cabine de véhicule industriel peut présenter des dimensions de l'ordre de 3m x 5m x 2m.

D'une manière générale, les peaux externe et interne 10 et 12 peuvent être fabriquées séparément. Dans ce cas, l'opération de fabrication est complétée par une opération d'assemblage des deux peaux externe 10 et interne 12. Cet assemblage est avantageusement assuré par collage pour éviter tout moyen de fixation nécessitant l'utilisation d'un outil.

En variante, les deux peaux externe 10 et interne 12 peuvent être fabriquées simultanément dans une seule opération de moulage par injection à basse pression.

La mise en place du matelas intercalaire 14 pour l'isolation phonique et thermique dépend de la structure utilisée.

Dans le cas d'une structure alvéolaire, le matériau constitutif peut être injecté, sous forme liquide ou pâteuse, dans l'espace délimité entre les deux peaux externe 10 et interne 12 pour s'étendre sous la forme de mousse qui va combler ledit espace.

Dans le cas d'une structure en nid d'abeilles ou pleine en balsa, les deux peaux externe 10 et interne 12 sont fabriquées séparément, ainsi que ladite structure, avant d'être assemblées par collage. En variante, les peaux 10 et 12 peuvent être surmoulées sur ladite structure.

Selon l'exemple illustré à la figure 2, le pavillon 1 forme un ensemble monobloc qui a été fabriqué par moulage des peaux externe 10 et interne 12, le matelas 14 en mousse de polyuréthanne ou autre mousse ayant été injecté dans l'espace délimité entre les deux peaux.

Le pavillon 1 est fixé directement à la partie supérieure du cadre C de l'ossature métallique de la cabine qui comprend notamment un logeron avant 20, des logerons latéraux (non représentés) et une plaque ou tôle arrière 22 pour fermer la face arrière du pavillon 1.

La fixation du pavillon sur le cadre C est avantageusement assurée par collage au moyen de films ou filets de colle 24.

La structure du pavillon 1 peut être complétée par des équipements pour améliorer le confort de la cabine, comme par exemple un coffre de rangement (R) ménagé à la partie avant du pavillon 1, au moins une fenêtre latérale F ménagée dans une paroi latérale 5c du pavillon, un éclairage E installé sur la face interne de la paroi supérieure 5b du pavillon 1.

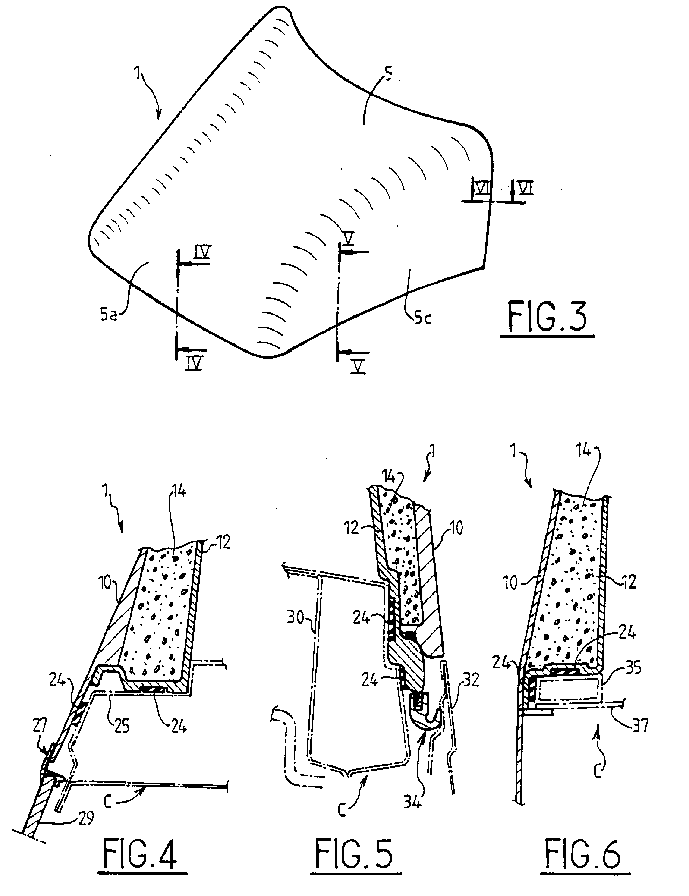

Selon un autre exemple illustré à la figure 3, le pavillon 1 a été fabriqué également par moulage des peaux externe 10 et interne 12 en deux opérations séparées, c'est-à-dire que les deux peaux ont été ensuite assemblées l'une à l'autre par collage, le matelas 14 en mousse de polyuréthanne ou autre mousse ayant été injecté dans l'espace délimité entre les deux peaux. En variante, les deux peaux 10 et 12 ne sont pas collées, mais placées dans un moule où la mousse de polyuréthanne est ensuite injectée.

La figure 4 représente un exemple de montage du pavillon 1 (figure 3) au niveau de sa partie avant sur le cadre C de l'ossature métallique de la cabine. Ce cadre C comprend une traverse 25 sur laquelle vient se coller la peau interne 12 et la peau externe 10 au moyen de films de colle 24.

Cet exemple montre que la forme du pavillon 1 au niveau de ses zones de fixation est en fait aménagée en fonction de la forme du cadre C de l'ossature métallique de la cabine. Concrètement, des profilés intermédiaires peuvent être prévus pour compléter l'habillage et l'esthétique, et assurer si nécessaire une étanchéité comme le profilé 27 qui assure la liaison entre la peau externe 10 et le pare-brise 29 du véhicule.

La figure 5 représente un exemple de montage du pavillon 1 (figure 3) au niveau de sa paroi latérale gauche 5c sur le cadre C de l'ossature métallique de la cabine. Ce cadre C comprend notamment un encadrement 30 de la portière gauche 32. La partie inférieure de la paroi latérale gauche 5c du pavillon vient se fixer par collage de la peau interne 12 au moyen de filets de colle 24 sur l'encadrement 30, et un profilé d'étanchéité 34 assure la liaison entre la pavillon 1 et la portière gauche 32.

La figure 6 représente un exemple de montage du pavillon 1 (figure 3) au niveau de sa face arrière ouverte sur le cadre C de l'ossature métallique de la cabine. Ce cadre C comprend notamment un longeron 35 et une plaque ou tôle arrière 37 solidaire du logeron 35. Le pavillon 1 est fixé par collage de la peau interne 12 au moyen de filets de colle 24.

L'invention a été décrite en prenant comme exemple un panneau destiné à former un pavillon de toit de véhicule industriel. Bien entendu, un tel panneau peut être aussi bien destiné à former le plancher du véhicule industriel sans modifier le procédé de fabrication.

## Revendications

1. Procédé de fabrication d'un panneau à structure composite, en particulier d'un pavillon ou d'un plancher de cabine (1) d'un véhicule industriel, ledit panneau comprenant une peau externe (10), une peau interne (12) et un matelas intermédiaire (14) d'isolation thermique et/ou phonique, caractérisé en ce qu'il consiste à réaliser lesdites peaux interne et externe (10,12) en une seule opération de moulage par injection et à basse pression d'une matière thermodurcissable tel qu'un polymère de dicyclopentadiène.

2. Procédé de fabrication selon la revendication 1, caractérisé en ce qu'il consiste :
- à réaliser séparément les peaux externe et interne (10,12) du panneau,
- à assembler l'une à l'autre les peaux externe et interne (10,12) par collage en délimitant entre elles un espace creux,
- à mettre en place le matelas (14) d'isolation phonique et/ou thermique dans l'espace creux délimité entre les peaux externe et interne (10,12), et
- à rapporter directement par collage le panneau ainsi formé sur un cadre de support.

3. Procédé de fabrication selon la revendication 1, caractérisé en ce qu'il consiste :
- à réaliser simultanément les peaux externe et interne (10,12) du panneau en délimitant entre elles un espace creux,
- à mettre en place le matelas (14) d'isolation phonique et/ou thermique dans l'espace creux délimité entre les peaux externe et interne (10,12), et
- à rapporter directement par collage le panneau ainsi formé sur un cadre de support.

4. Procédé de fabrication selon la revendication 2 ou 3, caractérisé en ce qu'il consiste à réaliser le matelas (14) d'isolation phonique et/ou thermique sous une forme cellulaire à partir d'un matériau élastomère ou d'une matière thermoplastique, en particulier une mousse de polyuréthanne.

5. Procédé de fabrication selon la revendication 2 ou 3, caractérisé en ce qu'il consiste à réaliser le matelas (14) d'isolation phonique et/ou thermique sous la forme d'une structure en nid d'abeilles en carton, en matière plastique, en acier ou en aluminium

6. Pavillon de cabine pour véhicule industriel, caractérisé en ce qu'il est réalisé par un panneau d'une seule pièce fabriqué selon le procédé tel que défini par l'une quelconque des revendications 1 à 5.

7. Pavillon de cabine selon la revendication 6, caractérisé en ce qu'il comprend également des accessoires d'équipement, tels une fenêtre (F) et/ou un coffre de rangement (R) et/ou un éclairage et/ou un toit ouvrant.

8. Pavillon de cabine selon la revendication 6 ou 7, caractérisé en ce qu'il forme un ensemble monobloc destiné à être fixé par collage sur le cadre (C) de carrosserie de la cabine.

9. Pavillon de cabine selon l'une quelconque des revendications 6 à 8, caractérisé en ce que les peaux externe (10) et interne (12) sont réalisées en une matière thermodurcissable tel qu'un polymère de dicyclopentadiène, et en ce que le matelas (14) d'isolation phonique et/ou thermique est réalisé en une mousse de polyuréthanne.

10. Plancher de cabine pour véhicule industriel, caractérisé en ce qu'il est réalisé par un panneau d'une seule pièce fabriqué selon le procédé tel que défini par l'une quelconque des revendications 1 à 5.
